# EUROPEAN PATENT APPLICATION

(11) **EP 4 703 082 A1**
(43) Date of publication of application: **04.03.2026**
(21) Application number: 24796358.0
(22) Date of filing: 18.04.2024
(51) Int. Cl.: B23Q 3/08, B23B 11/00

(54) **BENCH AND VACUUM SUCTION CUPS FOR A MACHINING CENTRE**

(30) Priority: 26.04.2023 ES 202330720 U
(71) Applicant: AG Robot X, S.L., 12550 Almassora (ES)
(72) Inventor: AGUT FAUCON, Erika, 12550 Almassora (ES)
(74) Representative: Ungria López, Javier
(86) International application number: PCT/ES2024/070240
(87) International publication number: WO 2024/223968

(57) **Abstract**

The invention relates to a bench and vacuum suction cups for a machining centre, which provide means for holding materials such as stony, ceramic or glass materials for the machining thereof. For this purpose, vacuum suction cups are used in combination with a flat bench without projections, dispensing with the connections and tubes of conventional suction cups. The invention is intended for the industry concerning the manufacture of machining centres and applicators thereof.

## Description

The technical sector is the sector intended for the manufacture of machining centres.

### Object

To provide simple and efficient means to offer a solution for holding stony materials such as marble, granite or ceramic or glass without prejudice to others, for the machining thereof by means of vacuum suction cups. To dispense with the connections and tubes in suction cups for vacuum supply, avoiding entanglement and deterioration of the equipment not only for cleaning purposes, but also for preventing automated handling due to the complexity of avoiding entanglement or breakage of the system's tubes. To allow manual positioning or gripping of the suction cup by a robot or head of the machining centre. To obtain a flat bench, without projections that prevent cleaning.

### Background

The use of vacuum holding means for holding workpieces is well known in the machining of laminar materials such as marble, granite, glass or ceramics. For this purpose, various suction cups are arranged on the workbench and the material is placed on these suction cups, which are mechanically fixed to the bench.

This type of solution requires the use of a plurality of openings and guides on the bench, which may limit the positions of the suction cups, and it takes a long time to fix them, which is even more important when machining short series. On the other hand, the openings and guides make maintenance and the removal of waste materials generated during the machining operation difficult, and the connection to vacuum equipment requires the corresponding connectors and tubes.

Other inventions also use a suction system to retain the assembly on the bench, which again requires each of the suction cups to be properly connected to a vacuum source, as can be seen in patent document US5433657A with priority ITMI92A2168 in which these suction cups also have a way of connecting to each other to adapt to the perimeter of a workpiece to be retained, or in patent document US20060128281A1, application filed by Bando Kiko Co Ltd., where the suction cups require their connectors and tubes again.

The applicant is not aware of any technical solutions that solve the aforementioned problem in an advantageous way as the invention proposed.

### Description of the invention

The work carried out on computer numerical control machining centres requires stable and robust workpiece fixing systems that guarantee precision of the work. Furthermore, when machining laminar workpieces such as kitchen worktops, through openings are made for the insertion of a sink or a tap and milling operations are performed on the edges thereof, which prevents the use of conventional clamping systems, as the upper face of the workpiece and edges to be machined must be free so that the machining tools do not interfere with any obstacle. On the other hand, the fragility of materials such as stony, ceramic or glass materials is critical when said materials have interior cavities, meaning that the suction cups must be placed with a distribution that supports the machining stresses and that this operation is done in a simple way without connectors and tubes exposed to dirt and interfering with each other.

Furthermore, the machining residues resulting from an operation, whether cutting, drilling, milling or polishing, form a sludge when mixed with the cooling liquid; this requires constant maintenance and cleaning of both the suction cups and the bench, and a bench with no projections on its surface is desirable.

The bench and vacuum suction cups for a machining centre comprises:
- a bench with a vacuum chamber therein and a plurality of through openings in its upper face;
- a plurality of bench plugs flush with the upper plane of said bench which cooperate with the through openings in sealing or transmitting the vacuum to the outside when pressed, having at least one spring and at least one O-ring, the plugs having at least one air passage formed by a longitudinal recess in the direction of the plug's axis of revolution;
- at least one suction cup with two flat, parallel working faces, one in contact with the bench and the other in contact with the lower face of the workpiece to be held, with at least one sealing O-ring and its perimeter housing on said faces;
- a vacuum chamber connected to the working faces of the suction cup, the suction cup having a push button protruding from the surface of the face in contact with the bench and cooperating with a plug of the latter, allowing suction from the vacuum chamber to the suction cup; at its opposite end and on the upper face of the suction cup there is an upper plug protruding from the surface of the face in contact with the workpiece to be held, with at least one spring, at least one O-ring, and at least one air passage formed by a longitudinal recess in the direction of the plug's axis of revolution;
- means for vertically displacing the plugs in their housings by means of compression of at least one spring;
- means for handling during automated placement of the suction cup on the bench, where automated placement can be carried out by the machining centre itself or an external robot or handling element by means of at least two conventional holding wedges, the geometry of which blocks any possible rotation of the space;

Versions are provided which have means for handling during placement of the suction cup on a computer numerical control machine or robot by means of a conventional holding tool-holder cone (not shown).

To make the description clearer, the operation is described: the suction cups are placed, either by means of an automated system or by hand, making the push button on the lower face coincide with one of the bench plugs, which equalises the pressure in both chambers; when the workpiece to be held is placed on the upper face of the suction cup, the upper plug is displaced allowing the vacuum to be produced on the upper face; the upper plug and bench plug acting as normally closed valves when they are not actuated by the workpiece load or the push button respectively. Manual placement can be assisted by means known in the state of the art, such as the use of laser projection.

### Description of the drawings

For a better understanding of what is described in the present specification, drawings are attached in which, by way of example, a list of the figures of the proposed invention is represented.

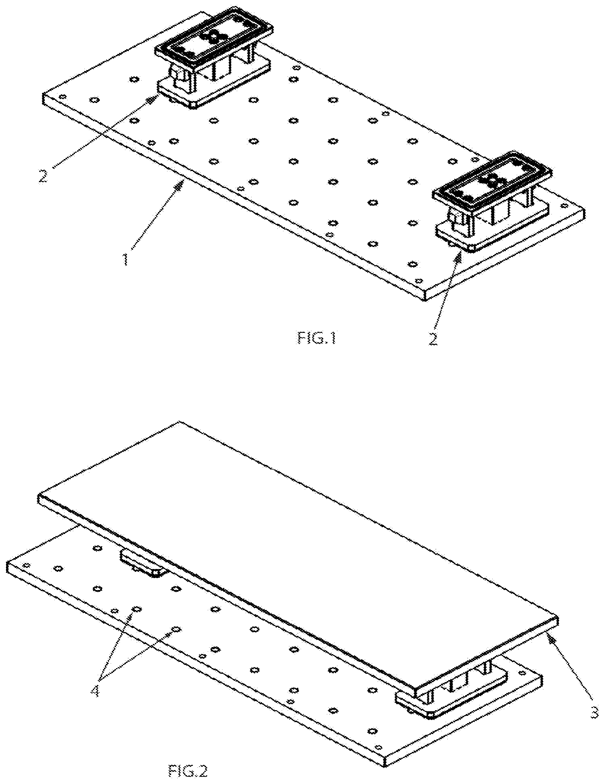

Figure 1 shows an isometric view of the bench (1) and the vacuum suction cup (2).
Figure 2 shows an isometric view of the bench, the bench plugs (4), the vacuum suction cups and the workpiece to be held (3) on the vacuum suction cups.

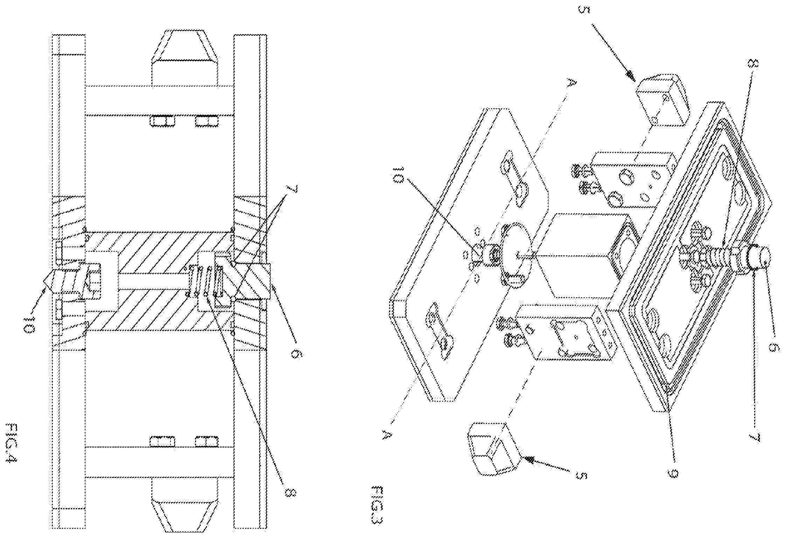

Figure 3 shows an exploded isometric view of a vacuum suction cup, showing the holding wedges (5) for holding to a machining centre or robotic arm, the upper plug (6), the O-ring (7), the spring (8), the O-ring housing (9) that seals the face of the workpiece to be held, and the pusher (10) of the bench plugs.
Figure 4 shows the cross-section A-A of figure 3 in side view. The upper plug (6), its sealing O-ring (7) and the spring (8) are shown. It shows that, as the workpiece to be held for machining is not in place, the upper plug protrudes slightly from the upper plane of the suction cup. Lastly, the push button (10) of the bench plugs is shown.

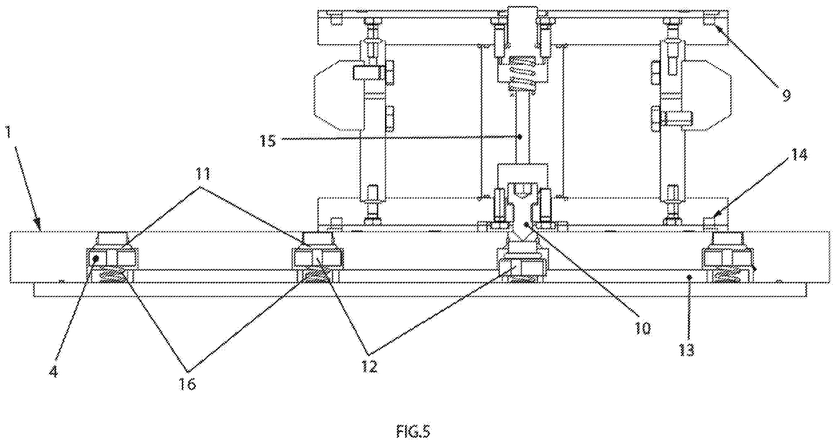

Figure 5 shows a cut in the middle plane of the vacuum suction cup and bench (1), and the vacuum chamber (13); this view shows four bench plugs (4) with their respective O-rings (11), springs (16) and air passages of the plug (12), one of these plugs being retracted by the action of the push button (10). The vacuum suction cup is sealed with respect to the bench and the workpiece to be held, and the O-ring housings (14 and 9) can be seen respectively.

### Description of a preferred embodiment

A preferred embodiment is cited by way of example, the materials used in its manufacture, as well as the application methods and all the accessory details that may be presented being independent of the object of the invention, as long as they do not affect their essentiality.

The present embodiment of this specification describes a bench and suction cup for holding laminar workpieces to be machined. Given the bench and suction cup assembly, this operation can be carried out as specified above without the cumbersome connections and tubes used in the common technique.

To do this, and for illustrative purposes, an aluminium bench is used due to its low cost, durability and protection against oxidation, ease of machining, and very good absorption of vibrations, without detriment to other materials such as composites or ceramics. This bench (1) has a vacuum chamber (13) therein and a plurality of through openings in its upper face. These openings cooperate with plugs (4) and these plugs are flush with the bench and have means for vertical displacement in their housings by means of the compression of at least one spring (16) and their sealing with at least one O-ring (11). Therefore, when pressed to connect the vacuum of the chamber to the outside, in this embodiment they have four air passages (12) of the plug that are formed by four longitudinal recesses in the direction of the plug's axis of revolution and are located in their quadrants, figure 5.

Furthermore, the bench cooperates with a plurality of suction cups (2). The suction cups have two flat, parallel working faces, one in contact with the bench and the other in contact with the lower face of the workpiece to be held, with at least one sealing O-ring and its perimeter housing (9 and 14), and they have a vacuum chamber (15) connected to the working faces of the suction cup. The suction cup has a push button (10) protruding from the surface of the face in contact with the bench and cooperating with a plug of the latter, allowing its operation, which produces suction from the vacuum chamber towards the suction cup. At its opposite end and on the upper face of the suction cup there is an upper plug (6) protruding from the surface of the face in contact with the workpiece to be held, with at least one spring (8), at least one O-ring, and at least one air passage formed by four longitudinal recesses in the direction of the plug's axis of revolution in a similar way to the plugs of the bench. When the workpiece to be held is placed on the suction cup, the very weight of the workpiece or a slight push of the workpiece against the suction cup is enough to allow the vacuum in the chamber (15) to suck the material to be machined in such a way that the force generated by the vacuum in the area of the suction cup exceeds the repulsive force of the spring (16), leaving a sufficiently strong holding for the machining of the workpieces.

The suction cup can be positioned and removed from the bench in this way by means of automated means materialised by two conventional holding wedges (5), the prismatic geometry of which blocks any possible rotation of the space, which, by way of illustration, have a pyramidal geometry in this embodiment.

## Claims

1. A bench and vacuum suction cups for a machining centre, **characterised in that** it comprises:
- the bench (1) with a vacuum chamber (13) therein and a plurality of through openings in its upper face;
- a plurality of bench plugs (4) flush with the upper plane of said bench which cooperate with the through openings in sealing or transmitting the vacuum to the outside when pressed, with at least one spring (16) and at least one O-ring (11), the plugs having at least one air passage (12) formed by a longitudinal recess in the direction of the plug's axis of revolution; and
- at least one suction cup (2) with two flat, parallel working faces, one in contact with the bench and the other in contact with the lower face of the workpiece to be held (3), with at least one sealing O-ring and its perimeter housing (9 and 14) on said faces; and
- a vacuum chamber (15) belonging to the suction cup and connected to the working faces of said suction cup, the suction cup having a push button (10) protruding from the surface of the face in contact with the bench and cooperating with a bench plug (4), allowing suction from the vacuum chamber (13) to the suction cup; at its opposite end and on the upper face of the suction cup there is an upper plug (6) protruding from the surface of the face in contact with the workpiece to be held, with at least one spring (8), at least one O-ring (11), and at least one air passage (12) formed by a longitudinal recess in the direction of the plug's axis of revolution;
- the plugs (4 and 6) can be displaced in their housings by means of compression or expansion of at least one spring (8 and 16); and
- means for holding the suction cup to the machining centre or robot by means of at least two holding wedges (5) that can be installed and fixed to the body of the suction cup, the prismatic geometry of which blocks any possible rotation in the space.

2. The bench and vacuum suction cups for a machining centre according to claim 1, **characterised in that** it is provided with holding means during placement of the suction cup on a computer numerical control machine or robot by installing a conventional holding tool-holder cone on the suction cup.
